Europäisches Patentamt

European Patent Office

Office européen des brevets

(19)

(11) Veröffentlichungsnummer : **0 003 964**
**B1**

(12) # EUROPÄISCHE PATENTSCHRIFT

(45) Veröffentlichungstag der Patentschrift :
02.12.81

(21) Anmeldenummer : 79100305.6

(22) Anmeldetag : 02.02.79

(51) Int. Cl.³ : **E 03 B 3/28**, B 01 D 53/26,
**C 01 B 5/00**

(54) **Verfahren und Anlage zur Gewinnung von Wasser aus atmosphärischer Luft.**

(30) Priorität : 09.03.78 DE 2810241

(43) Veröffentlichungstag der Anmeldung :
19.09.79 (Patentblatt 79/19)

(45) Bekanntmachung des Hinweises auf die Patenterteilung : 02.12.81 Patentblatt 81/48

(84) Benannte Vertragsstaaten :
CH FR GB IT

(56) Entgegenhaltungen :
CH - A - 606 644
DE - A - 2 624 392
DE - A - 2 702 701
DE - C - 663 920
DE - C - 731 471

(73) Patentinhaber : **M.A.N. MASCHINENFABRIK AUGS-
BURG-NRNBERG Aktiengesellschaft
Dachauer Strasse 667 Postfach 50 06 20
D-8000 München 50 (DE)**

(72) Erfinder : **Bulang, Wolfgang, Dr.
Lavendelweg 6
D-8031 Eichenau (DE)**
Erfinder : **Michel, Helmut, Dr.
Gärtnerweg 21
D-8047 Karlsfeld (DE)**

# Verfahren und Anlage zur Gewinnung von Wasser aus atmosphärischer Luft

Die Erfindung betrifft ein Verfahren zur Gewinnung von Wasser aus atmosphärischer Luft, wobei während einer ersten Phase ein erster Strom kühler feuchter Luft aus der Atmosphäre durch einen ein wasseradsorbierendes Mittel enthaltenden Adsorber geleitet wird, um Wasserdampf an das wasseradsorbierende Mittel abzugeben, wobei während einer zweiten Phase ein im Kreis geführter, zweiter Luftstrom mittels einer Wärmequelle z.B. der Sonne, unter Verwendung eines Heizkörpers, z.B. eines Sonnenkollektors erwärmt wird und danach durch den Adsorber geleitet wird, um Wärme an das wasseradsorbierende Mittel abzugeben und dabei an dem wasseradsorbierenden Mittel gebundenes Wasser auszunehmen, das er durch Kondensation in einem Kondensator wieder abgibt, wonach das kondensierte Wasser gesammelt und abgeleitet wird.

Ein solches Verfahren wurde in der DE-A 27 38 874 vorgeschlagen. Bei dem vorgeschlagenen Verfahren wird während der zweiten oder Regenerationsphase der regenerierende Luftstrom im geschlossenen Kreislauf nacheinander durch den Heizkörper, der als Sonnenkollektor ausgebildet ist, Adsorber und Kondensator geführt, oder er wird durch mehrere abwechselnd in Reihe geschalteter als Sonnenkollektoren ausgebildete Heizkörper und Adsorber geführt und anschließend durch den Kondensator und wieder zurück in den ersten Sonnenkollektor geleitet.

Aufgabe der vorliegenden Erfindung ist es, das oben genannte Verfahren, bei dem nur ein Adsorber verwendet wird, derart auszugestalten, daß mindestens ebensoviel Wasser gewonnen werden kann, wie wenn mehrere in Reihe geschalteter Adsorber eingesetzt werden.

Die der Erfindung zugrunde liegende Aufgabe wird dadurch gelöst, daß während der zweiten Phase zunächst der gesamte zweite Luftstrom im Kreislauf unter Ausschluß des Kondensators durch den Heizkörper und den Adsorber geleitet wird und daß ab einem bestimmten Zeitpunkt der zweite Luftstrom nach der Aufnahme von Wasser in dem Absorber in zwei Teilströme zerlegt wird, von denen der eine den Kondensator umgeht und von denen der andere durch den Kondensator geleitet wird, um dort Wasserdampf durch Kondensation absugeben und daß nach der Kondensation die beiden Teilströme wieder zusammengeführt werden, um gemeinsam durch den Heizkörper und danach durch den Adsorber geleitet zu werden.

Das erfindungsgemäße Verfahren hat gegenüber dem bereits vorgeschlagenen Verfahren den Vorteil, daß mit dem erfindungsgemäßen Verfahren eine wesentlich größere Wasserausbeute erzielt werden kann.

Ein weiteres Merkmal der Erfindung besteht darin, daß der gesamte zweite Luftstrom so lange im Kreislauf unter Ausschluß des Kondensators durch den Heizkörper und den Adsorber geführt von Wärme im Heizkörper erhölten Temperatur mit Wasserdampf gesättigt ist. Durch diese Maßnahme wird das gesamte oder nahezu das gesamte an dem wasseradsorbierenden Mittel gebundene Wasser von dem zweiten Luftstrom beim Durchströmen des Adsorbers aufgenommen.

Um eine möglichst vollständige Kondensation des Wasserdampfes, der in dem zum Kondensator geleiteten Teilstrom enthalten ist, zu erzielen, ist es vorteilhaft, wenn dieser Teilstrom vor Eintritt in den Kondensator vorgekühlt wird. Damit die Temperatur des einen Teilstromes bei der Zumischung des anderen Teilstromes nicht zu sehr absinkt, ist es zweckmäßig, wenn der andere Teilstrom nach Austritt aus dem Kondensator und vor Wiedereinführung in den einen Teilstrom vorgewärmt wird. Vorzugsweise wird der andere Teilstrom mittels eines Wärmetauschers vorgekühlt bzw. vorgewärmt, indem der andere Teilstrom vor Eintritt in den Kondensator und nach Austritt aus dem Kondensator durch den Wärmetauscher geleitet wird.

Nach einem weiteren Merkmal der Erfindung wird der erste Luftstrom der kühlen Nachtluft entnommen und findet die erste Phase während der Nacht und die zweite Phase tagsüber statt. Wird ein solcher Zyklus gewählt, dann ist es von Vorteil, wenn in der ersten Phase vor Eintritt des ersten Luftstromes in den Adsorber ein Teilstrom von dem ersten Luftstrom abgezweigt und durch einen mit dem Kondensator kombinierten Kältespeicher geleitet wird, um den Kältespeicher abzukühlen, während der Rest des ersten Luftstromes durch den Adsorber tritt. Weiterhin ist es vorteilhaft, wenn der andere Teilstrom des zweiten Luftstromes mittels des nachts gespeicherter Kälte vor Eintritt in den Kondensator vorgekühlt und/oder mittels tagsüber gespeicherter Wärme nach Wiederaustritt aus dem Kondensator vorgewärmt wird.

Die Beladung des wasseradsorbierenden Mittels und die Abkühlung des Kondensators während der Nacht ist vorteilhaft, weil die Lufttemperatur bei Nacht absinkt und die relative Luftfeuchtigkeit entsprechend hoch ist.

Nach einem weiteren Merkmal der Erfindung wird die zur Vorwärmung des anderen Teilstromes des zweiten Luftstromes verwendete Wärme dem Kältespeicher-Kondensator zu Beginn der ersten Phase entzogen. Diese Wärme wird dem Kältespeicher-Kondensator vorzugsweise dadurch entzogen, daß zu Beginn der ersten Phase der andere Teilstrom ders ersten Luftstromes zunächst durch den Kältespeicher-Kondensator und anschließend durch den Wärmespeicher geleitet wird bis der Wärmespeicher eine maximale Temperatur erreicht. Danach wird dieser Teilstrom dann nur noch durch den Kältespeicher-Kondensator geleitet, um ihn weiter abzukühlen.

Zur Durchführung des erfindungsgemäßen Verfahrens wird nach einer weiteren Ausgestaltung der Erfindung eine Anlage angeben, die aus dem Heizkörper, dem das wasseradsorbierende Mittel enthaltenden Adsorber, dem Kondensator, einem Ringkanal zur Führung von Luft durch den Heizkörper, den Adsorber und den Kondensator und mindestens einem im Ringkanal angeordneten Ventilator zur Förderung der Luft durch den Ringkanal besteht und bei der das kondensierte Wasser gesammelt und abgeleitet wird. Diese Anlage ist dadurch gekennzeichnet, daß zwischen Adsorber und Kondensator ein Bypasskanal abzweigt, der zwischen Kondensator und Heizkörper wieder in den Ringkanal einmündet, daß ein Ventil zur Regelung der während der zweiten Phase durch den Bypasskanal und durch den Kondensator strömenden Luftmengen vorgesehen ist und daß unterhalb des Kondensators eine Auffangwanne mit Austrittsstutzen angeordnet ist.

Vorzugsweise ist das Ventil als bewegliche Klappe ausgebildet, die in einer ersten Schließstellung die Strömung im Ringkanal zwischen Adsorber und Kondensator unterbindet und den Weg für die Luft durch den Bypasskanal freigibt, die in einer zweiten Schließstellung die Strömung durch den Bypasskanal unterbindet und den Weg für die Luft im Ringkanal zwischen Adsorber und Kondensator freigibt und die in einer von einer Vielzahl von Zwischenstellungen den Weg für eine dieser Zwischenstellung entsprechenden Luftmenge sowohl durch den Bypasskanal als auch durch den Ringkanal im Bereich zwischen Adsorber und Kondensator freigibt.

Es ist zweckmäßig, wenn der Kondensator als kombinierter Kondensator-Kältespeicher ausgebildet ist, der ein bei Abkühlung oder Erwärmung im flüssigen oder festen Zustand verbleibendes oder vom flüssigen in den festen bzw. vom festen in den flüssigen Zustand übergehendes Speichermedium enthält. Dieses Speichermedium hat eine möglichst große Wärmekapazität oder ist ein Medium mit einer geeigneten Schmelztemperatur, um die latente Schmelzwärme zusätzlich zu der Wärmekapazität aus nützen zu können. Es können auch mehrere Medien unterschiedlicher Schmelzpunkte verwendet werden, wenn die Nachttemperaturen im Laufe des Jahres schwanken.

Es kann von Vorteil sein, wenn zwischen Lufteintritt und Luftaustritt des Kondensators ein Wärmetauscher geschaltet ist, durch den im Betrieb der Anlage der andere Teilstrom des zweiten Luftstromes während der zweiten Phase vor Eintritt in den Kondensator und nach Wiederaustritt aus dem Kondensator zur Wärmeaustausch strömt. Zur Regelung der durch die Anlage tretenden und/oder in der Anlage zirkulierenden Luftströme ist es zweckmäßig, wenn der oder die Ventilatoren und das Ventil über einen oder mehrere Temperatur- und Feuchtefühler regelbar sind.

Vorzugsweise ist ein Kältespeicher zur Vorkühlung des in den Kondensator strömenden anderen Teilstrom des zweiten Luftstromes vorgesehen und kann ein Wärmespeicher zur Vorwärmung des aus dem Kondensator wieder austretenden anderen Teilstromes des zweiten Luftstromes verwendet werden.

Als Wärmequelle wird vorzugsweise die Sonne verwendet und als Heizkörper wird ein Sonnenkollektor eingesetzt. Es können aber auch andere Wärmequellen, die vorzugsweise einen Temperaturbereich von 70-100 °C haben, wie z.B. Abwärme von Kraftwerken oder Verbrennungsmaschinen verwendet werden. Bei Verwendung einer derartigen Wärmequelle wird dann der Heizkörper als Wärmetauscher ausgebildet sein.

Vorzugsweise besteht der Sonnenkollektor aus einer Vielzahl von parallel nach unten gerichteten Kanälen, und ist der Adsorber mit dem wasseradsorbierenden Mittel unmittelbar unterhalb des Sonnenkollektors angeordnet. Dadurch wird eine höchst effektive Umwandlung der eingestrahlten Sonnenenergie durch vielfache Reflektion in Wärme erzielt und wird durch die spiegelnde Oberfläche des Kollektormaterials eine Wärmerückstrahlung vermieden. Ferner wird vom Kollektor abgestrahlte Wärme dem wasseradsorbierenden Mittel zugeführt und der durch den Kollektor erwärmte Luftstrom wird unmittelbar ohne Wärmeverluste dem Adsorber zugeführt. Zur Verstärkung der Sonneneinstrahlung in den Kollektor sind Spiegelflächen oberhalb des Sonnenkollektors vorgesehen.

Im folgenden wird ein Ausführungsbeispiel der Erfindung unter Bezugnahme auf die Zeichnung beschrieben.

Es zeigen :

Fig. 1 eine Wassergewinnungsanlage nach der Erfindung in Betrieb während der ersten Phase des erfindungsgemäßen Verfahrens, und

Fig. 2 die in Fig. 1 dargestellte Anlage in Betrieb während der zweiten Phase des erfindungsgemäßen Verfahrens.

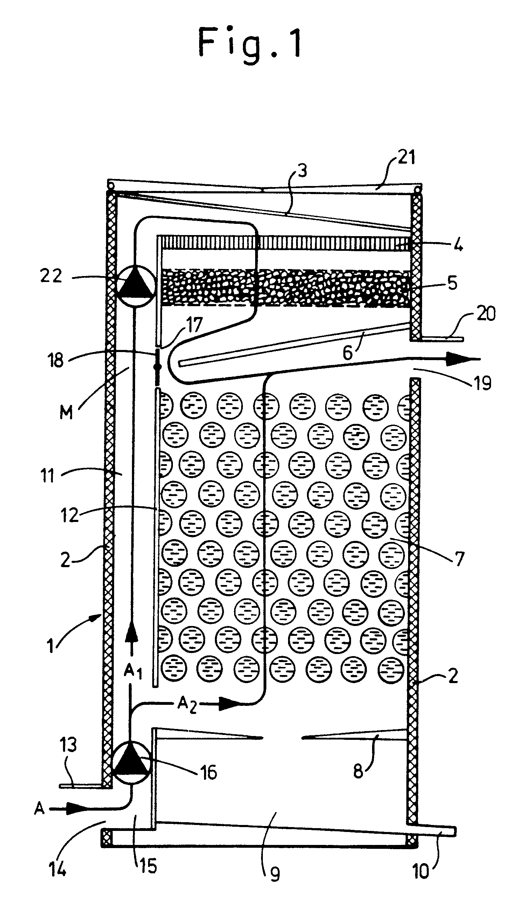

Eine Wassergewinnungsanlage nach der Erfindung besteht aus einem Gehäuse 1 mit Vertikalwänden 2 und einer oberen, querliegenden Abdeckung 3, die lichtdurchlässig ist. Innerhalb des Gehäuses 1 befinden sich von oben nach unten ein Sonnenkollektor 4, ein das wasseradsorbierende Mittel enthaltendes Adsorberbett 5, eine Luftleitplatte 6 und ein Kältespeicher-Kondensator 7, der ein kältespeicherndes Mittel enthält. Unterhalb des Kondensators 7 ist ein querliegender Rost 8 angeordnet, der die obere Abdeckung einer Auffangwanne 9 bildet. Die Auffangwanne 9 ist mit einem Wasseraustrittsstutzen 10 versehen. Der Sonnenkollektor 4, das Adsorberbett 5, die Luftleitplatte 6 und der Kältespeicher-Kondensator 7 sind in einem Ringkanal 11 angeordnet, der durch die Vertikalwände 2 des Gehäuses 1, die obere lichtdurchlässige Abdeckung 3, den Rost 8 und eine senkrecht stehende Zwischenwand 12 begrenzt wird. Am unteren Ende des Gehäuses 1 befindet sich eine mittels einer Klappe 13 verschließbare Lufteintrittsöffnung 14, an die sich im Innern des Gehäuses 1 ein Lufteintrittskanal 15 anschließt, der in den Ringkanal 11 mündet. In dem Lufteintrittskanal 15 befindet sich ein erster Ventilator 16, der dazu dient, Luft aus der Atmosphäre durch die Einlaßöffnung 14 anzusaugen und in den Ringkanal 11 zu fördern. Die Zwischenwand 12 hat zwischen Adsorberbett 5 und Kondensator 7 im Bereich der Luftleitplatte 6 einen Durchgang 17, in dem eine einstellbare Klappe 18 angeordnet ist. Die Klappe 18 arbeitet mit der Luftleitplatte 6 und der Zwischenwand 12 derart zusammen, daß sie in einer ersten Schließstellung die Strömung im Ringkanal 11 zwischen Luftleitplatte 6 und Zwischenwand 12 unterbindet und den Weg für die Luft durch den Durchgang 17 oder Bypasskanal freigibt und daß sie in einer zweiten Schließstellung den Durchgang 17 oder Bypasskanal verschließt und den Weg für die Luft im Ringkanal zwischen Luftleitplatte 6 und Zwischenwand 12 freigibt. Die Klappe 18 kann in einer von einer Vielzahl von Zwischenstellungen festgelegt werden, in denen der Durchgang 17 sowie der Ringkanal 11 im Bereich der Luftleitplatte 6 teilweise geöffnet ist. Zwischen der Luftleitplatte 6 und dem Kondensator 7 hat das Gehäuse 1 eine Luftaustrittsöffnung 19, die durch eine Klappe 20 verschließbar ist. Oberhalb der lichtdurchlässigen Abdeckung 3 sind schwenkbare Spiegel 21 angeordnet, die in der aufgeklappten Stellung die einfallenden Sonnenstrahlen auf den Kollektor 4 lenken (siehe Fig. 1) und die in der eingeklappten Stellung als Abdeckplatten für den Sonnenkollektor dienen können, falls die Witterung es erforderlich machen sollte. Ein zweiter Ventilator 22 ist im Ringkanal 11 im Bereich zwischen der Klappe 18 und der oberen lichtdurchlässigen Abdeckung 3 auf der dem Adsorberbett 5 abgekehrten Seite der Zwischenwand 12 angeordnet und dient dazu, die Luft im geschlossenen Kreislauf durch den Sonnenkollektor 4, das Adsorberbett 5, den Durchgang 17 und wieder zurück zum Sonnenkollektor zu fördern. Der Sonnenkollektor 4 besteht aus einer Vielzahl von parallel gerichteten Kanälen. Als wasseradsorbierendes Mittel wird Silicagel verwendet und als Speichermedium wird Wasser verwendet. Es können auch Glaubersalz-Kochsalz-Mischungen und sonstige eutektische Mischungen von Salzhydraten als Speichermedium verwendet werden.

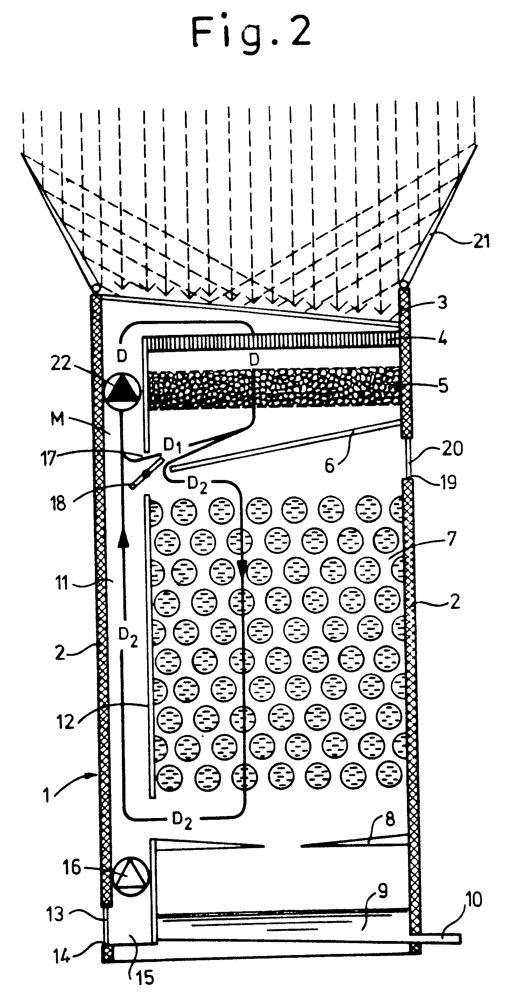

Die Wassergewinnungsanlage nach Fig. 1 und 2 arbeitet wie folgt :

In einer ersten Phase, die während der Nacht stattfindet (siehe Fig. 1), sind die Klappen 13 und 20 jeweils in der Öffnungsstellung und die Spiegel 21 befinden sich in der eingeklappten Stellung. Die Klappe 18 befindet sich in der zweiten Schließstellung, in der sie den Durchgang 17 verschließt und den Weg für die Luft zwischen Luftleitplatte 6 und Zwischenwand 12 freigibt. Beide Ventilatoren 16 und 22 sind in Betrieb. Der Ventilator 16 saugt eine mit Wasserdampf beladenen Luftstrom A aus der kühlen Nachtluft an. Der Luftstrom A wird in zwei Teilströme A1 und A2 aufgeteilt, von denen der Teilstrom A1 durch das Adsorberbett 5 geführt wird, wobei das im Adsorberbett enthaltene wasseradsorbierende Mittel mit Wasserdampf aus dem Teilstrom A1 beladen wird und der Teilstrom A1 die freiwerdende Bindungswärme abführt. Der zweite Teilstrom A2 wird durch den Kondensator-Kältespeicher 7 geführt, wobei sich das dort enthaltene Speichermedium abkühlt. Beide Teilströme A1 und A2 vereinigen sich wieder im Bereich zwischen der Luftleitplatte 6 und dem Kältespeicher-Kondensator 7 und verlassen die Anlage wieder durch die Luftaustrittsöffnung 19.

In einer zweiten Phase, die tagsüber stattfindet (siehe Fig. 2), wird die Wassergewinnungsanlage zur Regeneration des Adsorbers 5 und zur Kondensation des hierbei desorbierten Wassers betrieben. In dieser Phase sind die Klappen 13 und 20 jeweils in der Schließstellung, die Spiegel 21 sind aufgeklappt, um die einfallenden Sonnenstrahlen auf den Kollektor zu lenken, der sich dabei erwärmt, der Ventilator 16 ist ausgeschaltet und der Ventilator 22 läuft. Die Klappe 17 befindet sich zunächst in der ersten Schließstellung, in der sie die Strömung der Luft im Bereich zwischen Luftleitplatte 6 und Zwischenwand 12 unterbindet und den Weg für die Luft durch den Durchgang 17 freigibt. Der Ventilator 22 treibt einen Luftstrom D an, der im oberen Teil der Anlage durch den Sonnenkollektor 4 und das Adsorberbett 5 zirkuliert. Der Luftstrom D nimmt im Sonnenkollektor 4 Wärme auf, wobei sich seine Temperatur erhöht und gibt anschließend diese Wärme teilweise an den Adsorber wieder ab, wobei sich das wasseradsorbierende Mittel erwärmt. Durch die Erwärmung des wasseradsorbierenden Mittels wird ein Teil des während der ersten Phase an dem wasseradsorbierenden Mittel gebundenen Wassers desorbiert. Das desorbierte Wasser wird von dem Luftstrom D beim Durchströmen des Adsorbers 5 aufgenommen. Wenn die Temperatur des Luftstromes D und des wasseradsorbierenden Mittels durch mehrmaliges Durchströmen des Sonnenkollektors 4 und des Adsorbers 5 genügend erhöht worden ist und sich der Luftstrom D entsprechend seiner erhöhten Temperatur mit Wasserdampf gesättigt hat, wird die Klappe 18 in eine vorgewählte Zwischenstellung eingeschwenkt, so daß ein Teilstrom D1 des Luftstromes D weiterhin durch den Durchgang 17, den Sonnenkollektor 4 und den Adsorber 5 zirkuliert und ein zweiter Teilstrom D2 zum Kondensator geführt wird. Die Mengen der beiden Teilströme D1 und D2 werden durch die Stellung der Klappe 18 bestimmt. Der Teilstrom D2 durchströmt den Kältespeicher-Kondensator 7 von oben nach unten, wird dabei auf eine niedrige Temperatur gebracht und gibt einen Teil des enthaltenen Wasserdampfes durch Kondensation ab. Der Kondensator-Kältespeicher nimmt die freiwerdende Kondensationswärme auf, die ihm später in der ersten Phase wieder entzogen wird. Der abgekühlte und teilweise entfeuchtete Teilstrom D2 tritt am unteren Ende des Kondensator-Kältespeichers wieder aus und wird zur Mischstelle M gefördert, wo er sich mit dem anderen Teilstrom D1 wieder vermischt. Die Kondensation des Wasserdampfes verläuft von oben nach unten und das kondensierte Wasser rinnt nach unten in die Auffangwanne 9, aus der es durch den Wasseraustrittsstutzen 10 abgelassen werden kann. Die Mischstelle M liegt im Bereich zwischen Klappe 18 und Ventilator 22. Beide Teilströme D1 und D2 werden nach der Vermischung als gemeinsamer Luftstrom D wieder durch den Ventilator 22, Sonnenkollektor 4 und Adsorberbett 5 geführt. Das von dem adsorbierenden Mittel während der ersten Phase aufgenommene Wasser wird zunehmend durch den Luftstrom D desorbiert und von dem Teilstrom D2 dem Kältespeicher-Kondensator 7 zugeführt. Dort erwärmt sich das Speichermedium von oben nach unten fortschreitend entsprechend der aufgenommenen Kondensationswärme. Durch die fortwährende Zirkulation des Luftstromes D in der erfindungsgemäßen Weise in zwei miteinander verbundenen Kreisläufen in der Anlage nach der Erfindung wird nahezu das gesamte an dem wasseradsorbierenden Mittel gebundene Wasser desorbiert, im Kältespeicher-Kondensator 7 kondensiert und in der Wasserwanne 9 aufgefangen.

Die Stärken der während der Desorptions- und Kondensationsphase in der Anlage zirkulierenden Luftströme D, D1 und D2 werden durch die Ventilatoren 16 und 22 und die Klappe 18 geregelt.

Die Anlage kann durch Aneinanderreihung mehrerer Module, die entsprechend der eben beschriebenen Anlage ausgebildet sind, beliebig vergrößert werden.

Die Anlage nach der Erfindung kann gleichermaßen einen Kondensator enthalten, der waagrecht durchströmt wird, wenn niedrige Bauhöhen verlangt werden, z.B. in Anlagen aus vorgefertigten Modulen.

Die Anlage nach der Erfindung kann dahingehend modifiziert werden, daß noch ein Wärmetauscher eingebaut wird, der eine Abkühlung des Luftstromes D2 vor Eintritt in den Kondensator und eine Erwärmung des Luftstromes D2 vor der Mischstelle M bewirkt. Diese Erwärmung des Luftstromes D2 kann auch durch einen Wärmespeicher erfolgen, der mit der Wärme, die in dem Kältespeicher-Kondensator während der Kondensationsphase gespeichert worden ist, beladen wird. Diese Beladung des Wärmespeichers mit der in dem Kältespeicher-Kondensator während der Kondensationsphase gespeicherten Wärme kann dadurch erfolgen, daß der Luftstrom A2 zunächst durch den Kältespeicher-Kondensator und anschließend durch den Wärmespeicher geleitet wird, wodurch eine Abkühlung des Kältespeicher-Kondensators und eine Aufheizung des Wärmespeichers bewirkt wird. Der Luftstrom A2 wird so lange durch den Kältespeicher-Kondensator und den Wärmespeicher geleitet, bis die Temperatur des Wärmespeichers ein Maximum erreicht hat. Würde der Luftstrom A2 über diesen Zeitpunkt hinaus noch durch den Wärmespeicher geleitet werden, so würde sich der Wärmespeicher wieder abkühlen.

**Ansprüche**

1. Verfahren zur Gewinnung von Wasser aus atmosphärischer Luft, wobei während einer ersten Phase ein erster Strom kühler feuchter Luft aus der Atmosphäre (A1) durch einen, ein wasseradsorbierendes Mittel enthaltenden Adsorber (5) geleitet wird, um Wasserdampf an das wasseradsorbierende Mittel abzugeben, wobei während einer zweiten Phase ein im Kreis geführter, zweiter Luftstrom (D) mittels einer Wärmequelle unter Verwendung eines Heizkörpers (4) erwärmt wird und danach durch den Adsorber (5) geleitet wird, um Wärme an das wasseradsorbierende Mittel abzugeben und dabei an dem wasseradsorbierenden Mittel gebundenes Wasser aufzunehmen, das er durch Kondensation in einem Kondensator (7) wieder abgibt, wonach das Kondensierte Wasser gesammelt und abgeleitet wird, dadurch gekennzeichnet, daß während der zweiten Phase zunächst der gesamte zweite Luftstrom (D) im Kreislauf unter Ausschluß des Kondensators (7) durch den Heizkörper (4) und den Adsorber (5) geleitet wird und daß ab einem bestimmten Zeitpunkt der zweite Luftstrom (D) nach der Aufnahme von Wasser in dem Adsorber (5) in zwei Teilströme (D1 und D2) zerlegt wird, von denen der eine (D1) den Kondensator (7) umgeht und von denen der andere (D2) durch den Kondensator (7) geleitet wird, um dort Wasserdampf durch Kondensation abzugeben und daß nach der Kondensation die beiden Teilströme (D1 und D2) wieder zusammengeführt werden, um gemeinsam durch den Heizkörper (4) und danach durch den Adsorber (5) geleitet zu werden.

2. Verfahren nach Anspruch 1, dadurch gekennzeichnet, daß der gesamte zweite Luftstrom (D) so lange im Kreislauf unter Ausschluß des Kondensators (7) durch den Heizkörper (4) und den Adsorber (5) geführt wird bis er entsprechend seiner durch Zufuhr von Wärme im Heizkörper (4) erhöhten Temperatur mit Wasserdampf gesättigt ist.

3. Verfahren nach Anspruch 1 oder 2, dadurch gekennzeichnet, daß der andere Teilstrom (D2) des zweiten Luftstromes (D) vor Eintritt in den Kondensator (7) vorgekühlt wird.

4. Verfahren nach einem der vorhergehenden Ansprüche 1 bis 3, dadurch gekennzeichnet daß der andere Teilstrom (D2) des zweiten Luftstromes (D) nach Austritt aus dem Kondensator (7) und vor Wiedereinführung in den einen Teilstrom (D1) des zweiten Luftstromes (D) vorgewärmt wird.

5. Verfahren nach Anspruch 4, wenn rückbezogen auf Anspruch 3, dadurch gekennzeichnet, daß der andere Teilstrom (D2) des zweiten Luftstromes (D) mittels eines Wärmetauschers vorgekühlt bzw. vorgewärmt wird, indem der andere Teilstrom (D2) des zweiten Luftstromes (D) vor Eintritt in den Kondensator (7) und nach Austritt aus dem Kondensator (7) durch den Wärmetauscher geleitet wird.

6. Verfahren nach einem der vorhergehenden Ansprüche 1 bis 5, dadurch gekennzeichnet, daß der erste Luftstrom (A) der kühlen Nachtluft entnommen wird und daß die erste Phase während der Nacht und die zweite Phase tagsüber stattfindet.

7. Verfahren nach Anspruch 6, dadurch gekennzeichnet, daß in der ersten Phase vor Eintritt des ersten Luftstromes (A) in den Adsorber ein Teilstrom (A2) von dem ersten Luftstrom (A) abgezweigt wird, daß dieser Teilstrom (A2) durch einen mit dem Kondensator (7) kombinierten Kältespeicher geleitet wird, um den Kältespeicher abzukühlen, während der Rest des ersten Luftstromes (A1) durch den Adsorber (5) tritt.

8. Verfahren nach einem der Ansprüche 4, 6 und 7, wenn rückbezogen auf Anspruch 3, dadurch gekennzeichnet, daß der andere Teilstrom (D2) des zweiten Luftstromes (D) mittels des nachts gespeicherter Kälte vor Eintritt in den Kondensator (7) vorgekühlt und/oder mittels tagsüber gespeicherter Wärme nach Wiederaustritt aus dem Kondensator (7) vorgewärmt wird.

9. Verfahren nach Anspruch 8, dadurch gekennzeichnet, daß die zur Vorwärmung des anderen Teilstromes (D2) des zweiten Luftstromes verwendete Wärme dem Kältespeicher-kondensator (7) zu Beginn der ersten Phase entzogen wird.

10. Verfahren nach Anspruch 9, dadurch gekennzeichnet, daß zu Beginn der ersten Phase der andere Teilstrom (A2) zunächst durch den Kältespeicher-Kondensator und anschließend durch den Wärmespeicher geleitet wird bis der Wärmespeicher eine maximale Temperatur erreicht hat, daß danach der Teilstrom (A2) nur noch durch den Kältespeicher-Kondensator (7) geleitet wird, um ihn weiter abzukühlen.

11. Anlage zur Durchführung des Verfahrens gemäß den Ansprüchen 1 bis 10 bestehend aus dem Heizkörper (4) dem das wasseradsorbierende Mittel enthaltenden Adsorber (5), dem Kondensator (7), einem Ringkanal (11) zur Führung von Luft durch den Heizkörper (4), den Adsorber (5) und den Kondensator (7) und mindestens einem im Ringkanal (11) angeordneten Ventilator (16) zur Förderung der Luft durch den Ringkanal (11), wobei das kondensierte Wasser gesammelt und abgeleitet wird, dadurch gekennzeichnet, daß zwischen Adsorber (5) und Kondensator (7) ein Bypasskanal abzweigt, der zwischen Kondensator (7) und Heizkörper (4) wieder in den Ringkanal (11) einmündet, daß ein Ventil (18) zur Regelung der während der zweiten Phase durch den Bypasskanal (17) und durch den Kondensator (7) strömenden Luftmengen vorgesehen ist und daß unterhalb des Kondensators (7) eine Auffangwanne (9) mit Austrittsstutzen (10) angeordnet ist.

12. Anlage gemäß Anspruch 11, dadurch gekennzeichnet, daß das Ventil (18) als bewegliche Klappe ausgebildet ist, die in einer ersten Schließstellung die Strömung im Ringkanal (11) zwischen Adsorber (5) und Kondensator (7) unterbindet und den Weg für die Luft durch den Bypasskanal (17) freigibt, die in einer zweiten Schließstellung die Strömung durch den Bypasskanal (17) unterbindet und den Weg für die Luft im Ringkanal (11) zwischen Adsorber (5) und Kondensator (7) freigibt und die in einer von einer Vielzahl von Zwischenstellungen den Weg für eine dieser Zwischenstellung entsprechenden Luftmenge sowohl durch den Bypasskanal (17) als auch durch den Ringkanal (11) im Bereich zwischen Adsorber (5) und Kondensator (7) freigibt.

13. Anlage gemäß einem der Ansprüche 11 oder 12, dadurch gekennzeichnet, daß der Kondensator (7) als kombinierter Kondensator-Kältespeicher ausgebildet ist, der ein bei Abkühlung oder Erwärmung im flüssigen oder festen Zustand verbleibendes oder vom flüssigen in den festen bzw. vom festen in den flüssigen Zustand übergehendes Speichermedium enthält.

14. Anlage gemäß einem der Ansprüche 11 bis 13, dadurch gekennzeichnet, daß zwischen Lufteintritt und Luftaustritt des Kondensators ein Wärmetauscher geschaltet ist, durch den im Betrieb der Anlage der andere Teilstrom (D2) des zweiten Luftstromes (D) während der zweiten Phase vor Eintritt in den Kondensator (7) und nach Wiederaustritt aus dem Kondensator (7) zum Wärmeaustausch strömt.

15. Anlage gemäß einem der vorhergehenden Ansprüche 11 bis 14, dadurch gekennzeichnet, daß zur Regelung der durch die Anlage tretenden und/oder in der Anlage zirkulierenden Luftströme (A, A1, A2, D, D1, D2) der oder die Ventilatoren (16 und 22) und das Ventil (18) über einen oder mehrere Temperatur- und Feuchtefühler regelbar sind.

16. Anlage gemäß einem der Ansprüche 11 bis 13 und 15, dadurch gekennzeichnet, daß ein Kältespeicher zur Vorkühlung des in den Kondensator (7) strömenden anderen Teilstrom (D2) des zweiten Luftstromes (D) vorgesehen ist.

17. Anlage gemäß einem der Ansprüche 11 bis 13, 15 und 16, dadurch gekennzeichnet, daß ein Wärmespeicher zur Vorwärmung des aus dem Kondensator (7) wieder austretenden anderen Teilstromes (D2) des zweiten Luftstromes (D) vorgesehen ist.

18. Anlage gemäß einem der Ansprüche 11 bis 17, dadurch gekennzeichnet, daß als Heizkörper ein Sonnenkollektor (4) zur Anwendung gelangt, der aus einer Vielzahl von parallel nach unten gerichteten Kanälen besteht, und daß der Adsorber (5) mit dem wasseradsorbierenden Mittel unmittelbar unterhalb des Sonnenkollektors (4) angeordnet ist.

19. Anlage gemäß Anspruch 18, dadurch gekennzeichnet, daß oberhalb des Sonnenkollektors (4) zur Verstärkung der Sonneneinstrahlung in den Kollektor Spiegelflächen (21) vorgesehen sind.

**Claims**

1. A method of obtaining water from atmospheric air in which, during a first phase, a first stream of cool moist air is conveyed from the atmosphere (A1) through an adsorber (5) containing a water-adsorbing agent so as to deliver water vapour to the water-adsorbing agent, whereas during a second phase a second air stream (D) conveyed in a circuit is heated by a source of heat using a heating member (4) and then conveyed through the adsorber (5) in order to deliver heat to the water-adsorbing agent and, in the process, take up water bonded to the water-adsorbing agent, the water subsequently condensing in a condenser (7), after which the condensed water is collected and removed, characterised in that during the first phase the total second air stream (D) is firstly conveyed in circuit, excluding the condenser (7), through the heating member (4) and the adsorber (5) and at a given time the second air stream (D), after taking up water in the adsorber (5), is divided into two partial streams (D1 and D2), one of which (D1) bypasses the condenser (7) whereas the other (D2) is conveyed through the condenser in order to deliver water-vapour by condensation therein and after the condensation the two partial streams (D1 and D2) are recombined and conveyed together through the heating member (4) and thence through the adsorber (5).

2. A method according to claim 1, characterised in that the total second air stream (D) is conveyed in circuit through the heating member (4) and the adsorber (5), excluding the condenser (7), until it is saturated with water-vapour corresponding to the increase in its temperature through the supply of heat in heating member (4).

3. A method according to claim 1 or 2, characterised in that the other partial stream (D2) is pre-cooled before entering the condenser (7).

4. A method according to any of the preceding claims 1 to 3, characterised in that the other partial stream (D2) is pre-heated after coming out of the condenser (7) and before being re-introduced into the first partial stream (D1).

5. A method according to claim 4, if referred back to claim 3, characterised in that the other partial stream (D2) is pre-cooled or pre-heated by a heat exchanger, by conveying the partial stream (D2) through the heat exchanger before it enters the condenser (7) and after it comes out of the condenser (7).

6. A method according to any of the preceding claims 1 to 5, characterised in that the first air stream (A) is taken from cool night air and the first phase is performed by night and the second phase by day.

7. A method according to claim 6, characterised in that during the first phase a partial stream (A2) is branched off the first air stream (A) before the stream enters the adsorber, and the partial stream (A) is conveyed through a cold store combined with the condenser (7) in order to cool the cold store, whereas the rest of the first air stream (A1) travels through the adsorber (5).

8. A method according to any of claims 4, 6 and 7, if referred back to claim 3, characterised in that the other partial stream (D2) of the second air stream (D) is pre-cooled by the coolness stored overnight before it enters the condenser (7) and/or is pre-heated by the heat stored by day after it re-emerges from the condenser (7).

9. A method according to claim 8, characterised in that the heat used for pre-heating the second partial current (D2) is removed from the cold store and condenser (7) at the beginning of the first phase.

10. A method according to claim 9, characterised in that at the beginning of the first phase the other partial stream (A2) is conveyed first through the cold store and condenser and then through the heat store until the heat store has reached a maximum temperature, after which the partial stream (A2) is conveyed only through the cold store and condenser (7) in order further to cool it.

11. An installation for performing the method according to claims 1 to 10, comprising the heating member (4), the adsorber (5) containing the water-adsorbing agent, the condenser (7), an annular duct (11) for conveying air through the heating member (4), the adsorber (5) and the condenser (7) and at least one valve (16) disposed in the annular duct (11) for conveying air through duct (11), the condensed water being collected and removed, characterised in that a bypass duct branches off between the adsorber (5) and the condenser (7) and re-opens into the annular duct (11) between the condenser (7) and the heating member (4) ; a valve (18) is provided for adjusting the amount of air flowing through the bypass duct (17) and condenser (7) during the second phase, and a collecting through (9) having outlet nozzles (10) is disposed under the condenser (7).

12. An installation according to claim 11, characterised in that the valve is in the form of a movable flap which in a first closure position stops the flow in the annular duct (11) between the adsorber (5) and the condenser (7) and clears the way for air through the bypass duct (17) ; in a second closure position it stops the flow through the bypass duct (17) and clears the way for air in the annular duct (11) between the adsorber (5) and condenser (7), and in any of a number of intermediate positions it clears the way for a amount for air corresponding to the intermediate position, both through the bypass duct (17) and through the annular duct (11) in the region between the adsorber (5) and the condenser (7).

13. An installation according to claim 11 or 12, characterised in that the condenser (7) is constructed as a combined condenser and cold store containing a storage medium which remains liquid or solid when cooled or heated or which changes from liquid to solid when cooled and from solid to liquid when heated.

14. An installation according to any of claims 11 to 13, characterised in that a heat exchanger is connected between the air inlet and air outlet of the condenser and when the installation is in operation the second partial stream (D2) of the second air stream flows through for heat exchange during the second phase before it enters the condenser (7) and after it re-emerges from the condenser (7).

15. An installation according to any of the preceding claims 11 to 14, characterised in that, in order to adjust the air streams (A, A1, A2, D, D1, D2) travelling through and/or circulating in the installation, the fan or fans (16 and 22) and the valve (18) are adjustable via one or more temperature and moisture sensors.

16. An installation according to any of claims 11 to 13 and 15, characterised in that the cold store is provided for pre-cooling the second partial stream (D2) of the second air stream (D) flowing into the condenser (7).

17. An installation according to any of claims 11 to 13, 15 and 16, characterised in that a heat store is provided for pre-heating the partial stream (D2) when it re-emerges from the condenser (7).

18. An installation according to any of claims 11 to 17, characterised in that the heating member is a solar collector (4) comprising a number of parallel, downwardly extending ducts, and the adsorber (5) containing the water-adsorbing agent is disposed immediately below the solar collector (4).

19. An installation according to claim 18, characterised in that mirror surfaces (21) are provided above the solar collector (4) for intensifying solar radiation into the collector.

**Revendications**

1. Procédé pour obtenir de l'eau à partir d'air atmosphérique, dans lequel, pendant une première phase, un premier courant d'air humide froid provenant de l'atmosphère (A1) est conduit à travers un adsorbeur (5) contenant un agent adsorbant l'eau, pour céder de la vapeur d'eau à l'agent adsorbant l'eau, dans lequel, pendant une deuxième phase, un second courant d'air (D) guidé en circuit est réchauffé au moyen d'une source de chaleur en utilisant un corps de chauffe (4) et est ensuite conduit à travers l'adsorbeur (5) pour céder de la chaleur à l'agent adsorbant l'eau et prélever alors à l'agent adsorbant l'eau de l'eau liée qu'il restitue par condensation dans un condenseur (7), à la suite de quoi l'eau condensée est collectée et évacuée, caractérisé en ce que pendant la deuxième phase, la totalité du second courant d'air (D) est d'abord conduite en circuit en excluant le condenseur (7) à travers le corps de chauffe (4) et l'adsorbeur (5) et en ce qu'à partir d'un instant déterminé, le second courant d'air (D) est divisé après le prélèvement de l'eau dans l'adsorbeur (5) en deux courants partiels (D1 et D2), dont l'un (D1) contourne le condenseur (7) et dont l'autre (D2) est conduit à travers le condenseur (7), pour y céder de la vapeur d'eau par condensation et en ce qu'après la condensation les deux courants partiels (D1 et D2) sont à nouveau conduits ensemble, pour être conduits conjointement à travers le corps de chauffe (4) et ensuite à travers l'adsorbeur (5).

2. Procédé selon la revendication 1, caractérisé en ce que la totalité du second courant d'air (D) est conduite en circuit en excluant le condenseur (7) à travers le corps de chauffe (4) et l'adsorbeur (5) jusqu'à ce qu'il soit saturé avec de la vapeur d'eau conformément à sa température élevée par amenée de chaleur dans le corps de chauffe (4).

3. Procédé selon l'une quelconque des revendications 1 et 2, caractérisé en ce que l'autre courant partiel (D2) du second courant (D) est prérefroidi avant l'entrée dans le condenseur (7).

4. Procédé selon l'une quelconque des revendications 1 à 3, caractérisé en ce que l'autre courant partiel (D2) du second courant d'air (D) est préchauffé après la sortie hors du condenseur (7) et avant réintroduction dans le courant partiel (D1) du second courant d'air (D).

5. Procédé selon la revendication 4 lorsqu'elle dépend de la revendication 3, caractérisé en ce que l'autre courant partiel (D2) du second courant d'air (D) est prérefroidi ou préchauffé au moyen d'un échangeur de chaleur, l'autre courant partiel (D2) du second courant d'air (D) étant conduit à travers l'échangeur de chaleur avant l'entrée dans le condenseur (7) et après la sortie hors du condenseur (7).

6. Procédé selon l'une quelconque des revendications 1 à 5, caractérisé en ce que le premier courant d'air (A) est prélevé dans l'air froid de la nuit et en ce que la première phase a lieu pendant la nuit et la seconde phase pendant le jour.

7. Procédé selon la revendication 6, caractérisé en ce que dans la première phase, avant l'entrée du premier courant d'air (A) dans l'adsorbeur, un courant partiel (A2) est dérivé du premier courant d'air (A), en ce que ce courant partiel (A2) est conduit à travers un accumulateur de froid combiné avec le condenseur (7), pour refroidir l'accumulateur de froid, tandis que le reste du premier courant d'air (A1) passe à travers l'adsorbeur (5).

8. Procédé selon l'une quelconque des revendications 4, 6 et 7 lorsqu'elle dépend de la revendication 3, caractérisé en ce que l'autre courant partiel (D2) du second courant d'air (D) est prérefroidi avant l'entrée dans le condenseur (7) au moyen du froid accumulé la nuit et/ou est préchauffé au moyen de la chaleur accumulée pendant le jour après être ressorti du condenseur (7).

9. Procédé selon la revendication 8, caractérisé en ce que la chaleur utilisée pour le préchauffage de l'autre courant partiel (D2) du second courant d'air est extraite du condenseur-accumulateur de froid (7) au début de la première phase.

10. Procédé selon la revendication 9, caractérisé en ce qu'au début de la première phase l'autre courant partiel (A2) est conduit d'abord à travers le condenseur-accumulateur de froid et ensuite à travers l'accumulateur de chaleur jusqu'à ce que l'accumulateur de chaleur ait atteint une température maximale, en ce qu'ensuite le courant partiel (A2) n'est encore conduit qu'à travers le condenseur-accumulateur de froid (7), pour le refroidir encore.

11. Installation pour la mise en œuvre du procédé selon les revendications 1 à 10, constituée par le corps de chauffe (4), l'adsorbeur (5) contenant l'agent adsorbant l'eau, le condenseur (7), un canal annulaire (11) pour conduire de l'air à travers le corps de chauffe (4), l'adsorbeur (5) et le condenseur (7) et au moins un ventilateur (16) disposé dans le canal annulaire (11) pour le transport de l'air à travers le canal annulaire (11), l'eau condensée étant collectée et évacuée, caractérisée en ce qu'entre l'adsorbeur (5) et le condenseur (7) est branché un canal de dérivation qui débouche à nouveau dans le canal annulaire (11) entre le condenseur (7) et le corps de chauffe (4), en ce qu'une vanne (18) est prévue pour le réglage des débits d'air s'écoulant pendant la deuxième phase à travers le canal de dérivation (17) et à travers le condenseur (7) et en ce que, au-dessous du condenseur (7) est disposée une cuvette collectrice (9) avec des tubulures de sortie (10).

12. Installation selon la revendication 11, caractérisée en ce que la vanne (18) est réalisée sous forme de volet mobile, qui dans une première position de fermeture interrompt l'écoulement dans le canal annulaire (11) entre l'adsorbeur (5) et le condenseur (7) et libère le passage pour l'air à travers le canal de dérivation (17), qui dans une seconde position de fermeture interrompt l'écoulement à travers le canal de dérivation (17) et libère le passage pour l'air dans le canal annulaire (11) entre l'adsorbeur (5) et le condenseur (7) et qui dans l'une d'une multiplicité de positions intermédiaires libère le passage pour un débit d'air correspondant à cette position intermédiaire aussi bien à travers le canal de dérivation (17) qu'également à travers le canal annulaire (11) dans la zone entre l'adsorbeur (5) et le condenseur (7).

13. Installation selon l'une quelconque des revendications 11 et 12, caractérisée en ce que le condenseur (7) est agencé en tant que condenseur-accumulateur de froid combiné qui contient un milieu accumulateur restant à l'état liquide ou solide en cas de refroidissement ou d'échauffement ou passant de l'état liquide à solide ou solide à liquide.

14. Installation selon l'une quelconque des revendications 11 à 13, caractérisée en ce qu'entre l'entrée d'air et la sortie d'air du condenseur, est monté un échangeur de chaleur à travers lequel s'écoule pour échange de chaleur, au cours du fonctionnement de l'installation, l'autre courant partiel (D2) du second courant d'air (D) pendant la deuxième phase avant l'entrée dans le condenseur (7) et après la nouvelle sortie hors du condenseur (7).

15. Installation selon l'une quelconque des revendications 11 à 14, caractérisée en ce que pour le réglage des courants d'air (A, A1, A2, D, D1, D2) passant à travers l'installation et/ou circulant dans l'installation, le ou les ventilateurs (16 et 22) et la vanne (18) sont réglables par l'intermédiaire d'un ou plusieurs détecteurs de température et d'humidité.

16. Installation selon l'une quelconque des revendications 11 à 13 et 15, caractérisée en ce qu'un accumulateur de froid est prévu pour le prérefroidissement de l'autre courant partiel (D2) du second courant d'air (D), s'écoulant dans le condenseur (7).

17. Installation selon l'une quelconque des revendications 11 à 13, 15 et 16, caractérisée en ce qu'un accumulateur de chaleur est prévu pour le préchauffage de l'autre courant partiel (D2) du second courant d'air (D), sortant à nouveau hors du condenseur (7).

18. Installation selon l'une quelconque des revendications 11 à 17, caractérisée en ce qu'on met en application en tant que corps de chauffe, un collecteur solaire (4) qui est constitué par une multiplicité de canaux parallèles dirigés vers le bas, et en ce que l'adsorbeur (5) avec l'agent adsorbant l'eau est disposé immédiatement au-dessous du collecteur solaire (4).

19. Installation selon la revendication 18, caractérisée en ce que, au-dessus du collecteur solaire (4) sont prévues des surfaces réfléchissantes pour le renforcement du rayonnement solaire dans le collecteur.

# Fig.1

# Fig.2